# EUROPÄISCHE PATENTSCHRIFT

(11) **EP 1 307 411 B1**
(45) Veröffentlichungstag und Bekanntmachung des Hinweises auf die Patenterteilung: **10.03.2004**
(21) Anmeldenummer: 01980236.2
(22) Anmeldetag: 07.08.2001
(51) Int. Cl.: C04B 28/04, C04B 18/24

(54) **VERFAHREN ZUM HERSTELLEN VON BETON ODER MÖRTEL MIT EINEM PFLANZLICHEN ZUSCHLAG**
METHOD FOR PRODUCING CONCRETE OR MORTAR USING A VEGETAL AGGREGATE
PROCEDE POUR PRODUIRE DU BETON OU DU MORTIER AU MOYEN D'UN AGREGAT VEGETAL

(30) Priorität: 09.08.2000 LU 90627
(43) Veröffentlichungstag der Anmeldung: 07.05.2003
(73) Patentinhaber: Trierweiler, Matthias, 54528 Salmtal, Dörbach (DE); Eifer Haus Luxemboug S.A., 1471 Luxemboug (LU)
(72) Erfinder: HÖHN, Heribert, 7563 Mersch (LU)
(74) Vertreter: Jochem, Bernd, Dipl.-Wirtsch.-Ing.
(86) Internationale Anmeldenummer: PCT/EP2001/009113
(87) Internationale Veröffentlichungsnummer: WO 2002/012145

(56) Entgegenhaltungen:
- WO-A-94/29232
- DE-A- 1 940 321
- DE-C- 847 725
- FR-A- 1 018 109
- GB-A- 638 501
- GB-A- 724 395
- PATENT ABSTRACTS OF JAPAN vol. 1999, no. 01, 29. Januar 1999 (1999-01-29) & JP 10 287457 A (GREEN GLOBE KK)
- CHEMICAL ABSTRACTS, vol. 114, no. 4, 28. Januar 1991 (1991-01-28) Columbus, Ohio, US; abstract no. 29105w, S. SUSUKI, ET AL.: Seite 313; XP000188216 & JP 02 141446 A (ID.) 30. Mai 1990 (1990-05-30)
- DATABASE WPI Week 199550 Derwent Publications Ltd., London, GB; AN 1995-390105 XP002187595 & JP 07 267708 A (MATSUSHITA ELECTRIC WORKS)
- CHEMICAL ABSTRACTS, vol. 106, no. 20, 18. Mai 1987 (1987-05-18) Columbus, Ohio, US; abstract no. 161682w, VEB MELIORATIONSKOMBINAT ROSTOCK: Seite 343; XP002187593 & DD 238 961 A (ID.) 10. September 1986 (1986-09-10)
- CHEMICAL ABSTRACTS, vol. 113, no. 4, 23. Juli 1990 (1990-07-23) Columbus, Ohio, US; abstract no. 28390c, S. GABIR, ET AL.: Seite 273; XP000155630 & BIOL. WASTES, Bd. 31, Nr. 4, 1990, Seiten 311-314,
- CHEMICAL ABSTRACTS, vol. 88, no. 18, 1. Mai 1978 (1978-05-01) Columbus, Ohio, US; abstract no. 125470b, Y. SANEDA, ET AL.: Seite 268; XP002187594 & JP 52 093432 A (ID) 5. August 1977 (1977-08-05)

## Beschreibung

Die vorliegende Erfindung betrifft ein Verfahren zur Herstellung eines Betons oder Mörtels auf Basis von nachwachsenden Rohstoffen.

### Stand der Technik

Die Herstellung von Beton und Mörtel auf Basis eines ausschließlich pflanzlichen Zuschlags, wie z.B. Holz-, Hanf- oder Schilfrohr, ist bekannt. Bei der Herstellung solcher Mörtel wird der geschredderte pflanzliche Rohstoff in einem erstem Arbeitsgang vormineralisiert. Bei dieser Vormineralisation werden die pflanzlichen Teilchen in ein Mineralisationsbad gegeben, bzw. mit einer Mineralisationsflüssigkeit benetzt oder besprüht, wobei üblicherweise Aluminiumsulfat oder Zement als Mineralisator verwendet wird. Anschließend werden die pflanzlichen Teilchen entwässert und getrocknet. Die getrockneten, vormineralisierten Teilchen können dann auf der Baustelle als Zuschlag mit Anmachwasser und Zement zu einem Mörtel vermischt werden. Die Vormineralisation des pflanzlichen Zuschlags gewährleistet, dass ein fester Verbund zwischen dem pflanzlichen Zuschlag und dem Zementstein erzielt wird, wodurch der Beton oder Mörtel die erforderliche Biegezugfestigkeit und Druckfestigkeit erreicht. Hierzu ist jedoch anzumerken, dass die bekannte Vormineralisation des pflanzlichen Zuschlags teuer und zudem umwelttechnisch nicht unbedenklich ist.

Es sind ebenfalls ältere Verfahren zum Herstellen von Beton oder Mörtel bekannt, bei denen nicht vormineralisierte pflanzliche Zuschläge mit mineralischen Zuschlägen, Anmachwasser und Zement vermischt werden. Diese Verfahren konnten sich in der Praxis jedoch nicht durchsetzen.

Aus der Patentschrift FR 1018109 von 1952 ist ein Werkstoff für schalldämmende Fußböden und Zwischenwände bekannt, der sich bevorzugt wie folgt zusammensetzt: 10 % künstlicher Zement, 10 % gemahlene Kreide, 25 % Sand, 40 % Sägemehl und 10 % pulverförmiger Kork. In der Patenschrift ist nicht angegeben was unter künstlichem Zement zu verstehen ist. Weiterhin ist anzumerken, dass der Werkstoff insgesamt 35 % mineralischen Zuschlag und einen sehr niedrigen Anteil an Bindemittel enthält. In der Patenschrift wird weiterhin kurz erwähnt, dass der Mörtel auch ausschließlich aus Zement, Kreide, Sand und Kork, bzw. aus Zement, Kreide, Sägemehl und Kork hergestellt werden kann. Betreffend die Mischverhältnisse der beiden letzten Mörtel enthält die Patentschrift FR 1018109 jedoch keine weiteren Angaben.

In der Patentschrift DE 847 725 von 1952 wird die Aufgabe aufgeworfen, einen Werkstoff zur Herstellung von nagelbaren Steinen, Leichtbauplatten, Fußbodenbelag zu schaffen, der keine wasserlöslichen Magnesiumverbindungen enthält und relativ billig herzustellen ist. Der als Lösung vorgestellte Werkstoff ist eine Mischung von Holzmehl oder Holzspänen, Kalkstein oder grauem Marmor (Körnung von 0 bis 1 mm) und Zement. Zur Herstellung von nagelbaren Steinen wird eine Mischung von 2 Gewichtsteilen Sägemehl oder Sägespänen, 4 Gewichtsteilen gemahlenem grauen Marmor und 3 Gewichtsteilen Zement vorgeschlagen. Zur Herstellung von Leichtbauplatten wird eine Mischung von 3 Gewichtsteilen mit Holzwolle vermischtem Sägemehl oder mit Holzwolle vermischten Sägespänen, 10 Gewichtsteilen gemahlenem grauen Marmor und 6 bis 7 Gewichtsteilen Zement vorgeschlagen. Zur Herstellung von Fußbodenbelag wird eine Mischung von 4 Gewichtsteilen Holzmehl, 12 Gewichtsteilen gemahlenem grauen Marmor und 20 Gewichtsteilen Zement vorgeschlagen. Beim Aushärten eines solchen Werkstoffs bilden der graue Marmor und der Zement eine relativ schwere mineralische Matrix aus, in welche die Holzfasern eingebunden sind. Es kann davon ausgegangen werden, dass dieser Werkstoff mit seiner relativ schweren mineralischen Matrix keine besondere Wärmedämmung und Schallisolierung erbringt.

Aus der Patentschrift GB 638,501 von 1950 ist ein angeblich wetterfester Werkstoff zum Herstellen von Paneelen, Dachplatten, Dachziegeln, Rohren und Dachrinnen bekannt. Eine bevorzugte Mischung dieses Werkstoff umfasst: 30 Gewichtsteile Papier oder Zellstoff, 40 Gewichtsteile Zement, 10 Gewichtsteile Schlämmkreide, 10 Gewichtsteile hydratierten Kalk und 10 Gewichtsteile Flussschlamm. Es kann davon ausgegangen werden, dass dieser Werkstoff keine gute Wärmedämmung und Schallisolierung ergibt.

WO 94 29232 stellt einen "Ultra-Zement" vor, der bei Betons und Mörtel mit pflanzlichen Zuschlägen eine sehr kurze Abblndzeit gewährleisten soll, da seine Hydrationsreaktion angeblich nicht negativ durch Inhaltsstoffe wie Zucker, Gerbstoffe usw. beeinflusst werden soll. Eine Mineralisierung der Oberfläche der pflanzlichen Zuschlagteilchen wird in WO 94 29232 nicht erwähnt.

### Aufgabe der Erfindung

Aufgabe der vorüegenden Erfindung ist es die Herstellung von Beton und Mörtel auf Basis eines pflanzlichen Zuschlags einfacher und billiger zu gestalten, wobei der ausgehärtete Beton/Mörtel ein relativ geringes spezifisches Gewicht, sowie gute Eigenschaften betreffend Wärmedämmung, Schallisolierung, Biegezugfestigkeit und Druckfestigkeit aufweisen soll.

### Allgemeine Beschreibung der Erfindung

Diese Aufgabe wird erfindungsgemäss durch ein Verfahren zum Herstellen von Beton oder Mörtel auf Basis eines ausschließlich pflanzlichen Zuschlags, eines mineralischen Bindemittels und Anmachwasser gelöst, wobei der pflanzliche Zuschlag ein spezifisches Gewicht von 80 bis 160 kg/m³, gemessen bei einer Restfeuchte von zirka 15 %, aufweist. Es wird auf eine Vormineralisation des pflanzlichen Zuschlags verzichtet. Stattdessen werden beim Mischen des Betons oder Mörtels pro Kubikmeter pflanzlichem Zuschlag 4 bis 14 kg (Im Normatfall 6 bis 12 kg), eines nicht hydratisierbaren, feingemahlenen Mineralisators zugesetzt. Unter einem "nicht hydratisierbaren Mineralisator" versteht man hierbei einen feingemahlenen, mineralischen Stoff, der im Gegensatz zum Bindemittel, keine Hydrate als Reaktionsprodukte mit dem Anmachwasser bildet. Es wurde festgestellt, dass der zugesetzte Mineralisator sich beim Mischen des Betons/Mörtels an der Oberfläche der pflanzlichen Zuschlagteilchen ansetzt, und dass er dann beim Aushärten gewährleistet, dass ein fester Verbund zwischen den pflanzlichen Zuschlagteilchen und der mineralischen Bindemittelmatrix erzielt wird, wodurch der Beton oder Mörtel die erforderliche Biegezugfestigkeit und Druckfestigkeit erreicht. in anderen Worten, es findet sozusagen eine Vormineralisation der Oberfläche des pflanzlichen Zuschlags beginnend mit dem Mischvorgang des Mörtels bis zur Hydratation des Bindemittels statt. Je feiner der Mineralisator gemahlen ist desto schneller und besser setzt er sich an der Oberfläche des pflanzlichen Zuschlags an. Hierzu ist ebenfalls anzumerken, dass sich der Mineralisator nur an der Oberfläche der pflanzlichen Zuschlagteilchen ansetzt und somit nicht die Zellstruktur der pflanzlichen Zuschlagteilchen angreift. Die zugesetzte Menge des Mineralisators wird zudem auf den pflanzlichen Zuschlag derart abgestimmt, dass sie gerade für eine einwandfreie Mineralisierung der Oberfläche der pflanzlichen Zuschlagteilchen ausreicht, bzw. dass nur ein geringer Überschuss vorliegt. Hierdurch wird vermieden, dass eine größere Menge des Mineralisators bei Erhärten des Betons oder Mörtels in die Bindemittelmatrix zwischen den pflanzlichen Zuschlagteilchen eingebunden wird. Schlussfolgernd bleibt festzustellen, dass das erfindungsgemäße Verfahren es ermöglicht die Gestehungskosten des pflanzlichen Zuschlags drastisch zu senken, indem es eine teure Vormineralisation in einem separaten Arbeitsgang überflüssig macht Durch den Wegfall einer separaten Vormineralisation des pflanzlichen Zuschlags werden zudem umwelttechnische Bedenken gegen das Herstellungsverfahren von Beton und Mörtel auf Basis eines pflanzlichen Zuschlags beseitigt. Die nicht pflanzlichen Bestandteile des erfindungsgemässen Betons/Mörtels sind auf das mineralische Bindemittel und den geringen Zusatz des Mineralisators beschränkt. Erstaunlicherweise weist der ausgehärtete Beton/Mörtel trotzdem eine ausgezeichnete Biegezugfestigkeit und Druckfestigkeit auf. Durch seinen hohen Anteil an pflanzlichen Zuschlag mit einem niedrigen spezifischen Gewicht und eine mineralische Bindemittelmatrix ohne weiteren mineralischen Füller, weist der ausgehärtete Beton/Mörtel zudem ein relativ geringes spezifisches Gewicht, sowie gute Eigenschaften betreffend Wärmedämmung, Schallisolierung auf.

Der Mineralisator ist vorteilhaft ein feingemahlenes Gesteinsmehl, wobei zumindest 80 Masse-% des Gesteinsmehl eine Korngröße von weniger als 0,09 mm aufweisen soll. Ein bevorzugter Mineralisator umfasst im wesentlichen handelsübliches, ungebranntes Kalziumcarbonat. Vorteile des ungebrannten Kalziumcarbonats sind u.a., dass es äußerst preisgünstig ist, eine große Mahlfeinheit aufweist, sich sehr gut im Wasser suspendiert und zudem ein geringes spezifisches Gewicht von lediglich 1,18 t/m³ aufweist. Das Mischungsverhältnis zwischen Mineralisator und Anmachwasser beträgt vorteilhaft 25 bis 50 kg Mineralisator auf 1000 kg Wasser.

Ein vorteilhaftes Bindemittel ist z.B. Portlandzement, insbesondere Portlandzement der Güte PZ 42,5. Falls Putzmörtel hergestellt werden soll, wird dem Portlandzement vorteilhaft ein hydratisierbarer Kalk, wie z.B. Weißkalk, beigemischt. Pro Kubikmeter pflanzlichem Zuschlag werden, je nach Art des mineralischen Bindemittels und Anwendung des Betons/Mörtels, zwischen 180 und 400 kg mineralisches Bindemittel zugesetzt.

Der pflanzliche Zuschlag setzt sich vorteilhaft aus faserigen Teilchen mit einem Durchmesser von 0 bis 5,0 mm zusammen. Soll ein Leichtbeton oder Leichtestrich hergestellt werden, so ist es von Vorteil wenn sich setzt sich der pflanzliche Zuschlag zum größten Teil aus faserigen Teilchen mit einer Länge von 5 mm bis 40 mm zusammensetzt. Soll ein Leichtputz oder Wärmedämmputz hergestellt werden, so ist es von Vorteil wenn sich setzt sich der pflanzliche Zuschlag zum größten Teil aus faserigen Teilchen mit einer Länge unter 5 mm zusammensetzt.

Der pflanzliche Zuschlag wird vorzugsweise aus einem faserigen, schnell nachwachsenden Pflanzen, z.B. durch Schreddem hergestellt. Es kommen hierzu u.a. in Frage: Nadelhölzer, Hanf, Schilfrohr. Laubholz ist wegen seines starken Zuckergehalts nicht geeignet. Es werden vor allem Pflanzen der C₄-Gruppe, welche sich durch eine hohe photosynthetische Leistung auszeichnen, bevorzugt. Besonders vorteilhaft finden die schnellwachsenden Pflanzen aus der Familie des Miscanthus Verwendung. Eine bevorzugte Miscanthusart ist der Miscanthus-Gigantheus, der einen sehr hohen Siliziumgehalt aufweist. Die nach dem erfindungsgemäßen Verfahren hergestellten Mörtel und Leichtbetone ergeben nach Erhärten besonders formstabile Produkte.

Es können jedoch ebenfalls Mischungen von verschiedenen Pflanzen als Rohstoffe für den Zuschlag Verwendung finden.

### Beschreibung eines Tests

Ein Mörtel wurde wie folgt in einem Teilermischer gemischt

### Zuschlag:

1 m³ bestehend aus 1/3 Nadelholz + 1/3 Hanf + 1/3 Miscanthus, geschreddert, Durchmesser der Teilchen von 0 mm bis 5 mm, Länge der Teilchen von 5 mm bis 40 mm; Restfeuchte weniger als 18%.

### Bindemittel:

280 kg Portlandzement der Güte PZ 42,5 und 100 kg Weißkalk

### Mineralisator:

9 kg handelsübliches Kalziumcarbonat, bestehend laut Hersteller aus 95 % CaCO₃ (nicht gebrannt) und 5 % Reststoffen, wobei 85 Masse-% eine Komgröße zwischen 0 mm und 0,09 mm aufweist und die maximale Überkorngröße 2 mm beträgt.

### Anmachwasser:

250 Liter, Temperatur zirka 18°C, zum Erreichen einer Konsistenz K1 (erdfeucht).

Beim Mischvorgang werden die Zuschlagstoffe, das Anmachwasser, die Bindemittel und der Mineralisator während 2 Minuten in einem Zwangsmischer (z.B. ein Tellermischer) () miteinander vermischt, wobei die Zugabereihenfolge im Wesentlichen unwichtig ist. Um einem Verkleben und Verklumpen der Mischung im Tellermischer vorzubeugen, ist es jedoch vorteilhaft zuerst den pflanzlichen Zuschlag und das Anmachwasser in den Tellermischer zu geben, bevor man den Mineralisator und das Bindemittel hinzu gibt.

Ein nach dieser Rezeptur gemischter Mörtel wurde am Lehrstuhl für Mechanik und Baukonstruktionen der Rheinisch-Westfälischen Technischen Hochschule (RWTH) Aachen (DE) (nachfolgend "Prüfinstitut" genannt) unter Aufsicht angesetzt und in Stahlformen der Größe 40 mm x 40 mm x 100 mm gegossen, leicht eingestampft, und abgezogen. Diese geformten Prüfkörper wurden während 28 Tagen zum Abbinden in einer Klimakammer des Prüfinstituts bei 18-20°C gelagert. Anschließend wurden 11 Prüfkörper durch das Prüfinstitut gemäss DIN EN 196 auf Biegzug- und Druckfestigkeit geprüft. Die arithmetischen Mittelwerte der 11 Prüfkörper ergaben: 3,64 N/mm² Biegezugfestigkeit; sowie 9,43 N/mm² Druckfestigkeit. Gemäss DIN-Norm werden für Putzmörtel z.B. nur 1 N/mm² Biegezugfestigkeit und 5 N/mm² Druckfestigkeit verlangt.

### Anwendung des Betons oder Mörtels

Der durch das erfindungsgemäße Verfahren hergestellte Beton oder Mörtel eignet sich hervorragend für die Herstellung von ökologischem und wärmedämmendem Leichtbeton, Mörtel für Innen und Außenputz, Estrichen und schwimmenden Estrichen, sowie ökologischen und wärmedämmenden Fertigwandelementen, Bausteinen und Dämmplatten. Diese Produkte finden ihre Anwendung sowohl im ökologischen Neubau von z.B. Ein- oder Mehrfamilienhäusern, wie bei der Sanierung von bereits bestehenden Gebäuden, z.B. bei der nachträglichen Trittschallisolierung von Holzdecken, wobei auch das relativ geringe Eigengewicht des fertigen Produktes (je nach Zusammenstellung 350-550 kg/m3) zur Geltung kommt.

## Patentansprüche

1. Verfahren zum Herstellen von Beton oder Mörtel auf Basis eines ausschließlich pflanzlichen Zuschlags, eines mineralischen Bindemittels und Anmachwasser, wobei der pflanzliche Zuschlag ein spezifisches Gewicht von 80 bis 160 kg/m³, gemessen bei einer Restfeuchte von zirka 15 %, aufweist, **dadurch gekennzeichnet, dass** beim Mischen des Betons oder Mörtels pro Kubikmeter pflanzlichem Zuschlag 4 bis 14 kg eines nicht hydratisierbaren, feingemahlenen Mineralisators zugesetzt werden.

2. Verfahren nach Anspruch 1, **gekennzeichnet dadurch, dass** der Mineralisator ein feingemahlenes Gesteinsmehl ist.

3. Verfahren nach Anspruch 1 oder 2, **gekennzeichnet dadurch, dass** zumindest 80 Masse-% des zugesetzten Mineralisators eine Korngröße von weniger als 0,09 mm aufweist.

4. Verfahren nach einem der Ansprüche 1 bis 3, **dadurch gekennzeichnet, dass** der Mineralisator im wesentlichen ungebranntes Kalziumcarbonat umfasst.

5. Verfahren nach einem der Ansprüche 1 bis 4, **dadurch gekennzeichnet, dass** das mineralische Bindemittel Portlandzement, insbesondere Portlandzement der Güte PZ 42,5 umfasst.

6. Verfahren nach einem der Ansprüche 1 bis 5, **dadurch gekennzeichnet, dass** das mineralische Bindemittel ein Gemisch von Portlandzement und Weißkalk ist.

7. Verfahren nach einem der Ansprüche 1 bis 6, **dadurch gekennzeichnet, dass** pro Kubikmeter pflanzlichem Zuschlag zwischen 180 und 400 kg mineralisches Bindemittel zugesetzt werden.

8. Verfahren nach einem der Ansprüche 1 bis 7, **dadurch gekennzeichnet, dass** das Mischungsverhältnis zwischen Mineralisator und Anmachwasser 25 kg bis 50 kg Mineralisator auf 1000 kg Wasser beträgt.

9. Verfahren nach einem der Ansprüche 1 bis 8, **dadurch gekennzeichnet, dass** der pflanzliche Zuschlag sich zum größten Teil aus faserigen Teilchen mit einem Durchmesser von 0 mm bis 5,0 mmzusammensetzt.

10. Verfahren nach Anspruch 9, **dadurch gekennzeichnet, dass** ein Leichtbeton oder Leichtestrich hergestellt wird, wobei der pflanzliche Zuschlag sich zum größten Teil aus faserigen Teilchen mit einer Länge von 5 mm bis 40 mm zusammensetzt.

11. Verfahren nach Anspruch 9, **dadurch gekennzeichnet, dass** ein Leichtputz oder Wärmedämmputz hergestellt wird, wobei der pflanzliche Zuschlag sich zum größten Teil aus faserigen Teilchen mit einer Länge unter 5 mm zusammensetzt.

12. Verfahren nach einem der Ansprüche 1 bis 11, **dadurch gekennzeichnet, dass** bei der Herstellung des pflanzlichen Zuschlags Nadelholz, Hanf und/oder Schilf verwendet wird.

13. Verfahren nach einem der Ansprüche 1 bis 12, **dadurch gekennzeichnet, dass** bei der Herstellung des pflanzlichen Zuschlags Pflanzen aus der Familie des Miscanthus verwendet werden.

14. Verfahren nach Anspruch 13, **dadurch gekennzeichnet, dass** bei der Herstellung des pflanzlichen Zuschlags die Pflanze Miscanthus-Gigantheus verwendet wird.

15. Verfahren nach einem der Ansprüche 1 bis 14, **dadurch gekennzeichnet, dass** das Verfahren zur Herstellung von Leichtbeton, Leichtmörtel, Leichtestrich, sowie Leichtputz und Wärmedämmputz angewandt wird.

## Claims

1. Method for producing concrete or mortar based on an exclusively vegetal aggregate, a mineral binding agent, and mixing water, the vegetal aggregate having a specific weight of 80 to 160 kg/m³, as measured at a residual moisture of approximately 15%, **characterised in that** 4 to 14 kg of a non-hydratizable, finely ground mineralizator is added for each cubic meter of the vegetal aggregate when the concrete or mortar is being mixed.

2. Method as defined in Claim 1, **characterised in that** the mineralizator is a finely ground stone dust.

3. Method as defined in Claim 1 or Claim 2, **characterised in that** at least 80%-mass of the mineralizator that is added has a grain size of less than 0.09 mm.

4. Method as defined in one of the Claims 1 to 3, **characterised in that** the mineralizator essentially includes raw calcium carbonate.

5. Method as defined in one of the Claims 1 to 4, **characterised in that** the mineral binding agent includes Portland cement, in particular PZ 42.5 Grade Portland cement.

6. Method as defined in one of the Claims 1 to 5, **characterised in that** the mineral binding agent is a mixture of Portland cement and white lime.

7. Method as defined in one of the Claims 1 to 6, **characterised in that** between 180 and 400 kg of mineral binding agent is added for each cubic meter of the vegetal aggregate.

8. Method as defined in one of the Claims 1 to 7, **characterised in that** the mixing ratio of mineralizator to mixing water amounts to 25 kg to 50 kg of mineralizator to 1,000 kg of water.

9. Method as defined in one of the Claims 1 to 8, **characterised in that** the vegetal aggregate is composed for the most part of fibrous particles with diameters ranging from 0 mm to 5.0 mm.

10. Method as defined in Claim 9, **characterised in that** a light concrete or a light wash floor is produced, the vegetal aggregate being composed for the most part of fibrous particles with the lengths ranging from 5 mm to 40 mm.

11. Method as defined in Claim 9, **characterised in that** a light plaster or thermal insulation plaster is produced, the vegetal aggregate being composed for the most part of fibrous particles with lengths of less than 5 mm.

12. Method as defined in Claim 1 to Claim 11, **characterised in that** coniferous wood, hemp and/or reeds are used for the production of the vegetal aggregate.

13. Method as defined in one of the Claims 1 to 12, **characterised in that** plants of the Miscanthus family are used for the production of the vegetal aggregate.

14. Method as defined in Claim 13, **characterised in that** the plant Miscanthus Gigantheus is used for production of the vegetal aggregate.

15. Method as defined in one of the Claims 1 to 14, **characterised in that** the method is used for producing light concrete, light mortar, light wash floor, as well as light plaster and thermal insulation plaster.

## Revendications

1. Procédé pour produire du béton ou du mortier sur la base d'un agrégat exclusivement végétal, d'un liant minéral et d'eau de gâchage, l'agrégat végétal ayant un poids spécifique compris entre 80 et 160 kg/m³, mesuré pour une humidité résiduelle d'environ 15 %,
**caractérisé en ce qu'**
au mélange du béton ou du mortier, sont ajoutés entre 4 et 14 kg d'un minéralisateur broyé fin non hydratable par mètre cube d'agrégat végétal.

2. Procédé selon la revendication 1,
**caractérisé en ce que**
le minéralisateur est une farine de pierre broyée fine.

3. Procédé selon la revendication 1 ou 2,
**caractérisé en ce qu'**
au moins 80 % en masse du minéralisateur ajouté a une dimension de particules inférieure à 0,09 mm.

4. Procédé selon l'une des revendications 1 à 3,
**caractérisé en ce que**
le minéralisateur comprend essentiellement du carbonate de calcium non-cuit.

5. Procédé selon l'une des revendications 1 à 4,
**caractérisé en ce que**
le liant minéral comprend du ciment Portland, en particulier du ciment Portland de qualité PZ 42,5.

6. Procédé selon l'une des revendications 1 à 5,
**caractérisé en ce que**
le liant minéral est un mélange de ciment Portland et de chaux blanche.

7. Procédé selon l'une des revendications 1 à 6,
**caractérisé en ce que**
entre 180 et 400 kg de liant minéral sont ajoutés par mètre cube d'agrégat végétal.

8. Procédé selon l'une des revendications 1 à 7,
**caractérisé en ce que**
le rapport de mélange entre le minéralisateur et l'eau de gâchage est de 25 kg à 50 kg de minéralisateur pour 1 000 kg d'eau.

9. Procédé selon l'une des revendications 1 à 8,
**caractérisé en ce que**
l'agrégat végétal est composé en grande partie de particules fibreuses ayant un diamètre de 0 mm à 5,0 mm.

10. Procédé selon la revendication 9,
**caractérisé en ce que**
un béton léger ou enduit léger est produit, dans lequel l'agrégat végétal est composé en grande partie de particules fibreuses ayant une longueur de 5 mm à 40 mm.

11. Procédé selon la revendication 9,
**caractérisé en ce que**
un crépi léger ou un crépi isolant est produit, dans lequel l'agrégat végétal est composé en grande partie de particules fibreuses ayant une longueur inférieure à 5 mm.

12. Procédé selon l'une des revendications 1 à 11,
**caractérisé en ce que**
lors de la production de l'agrégat végétal, un bois résineux, du chanvre et/ou des roseaux sont utilisés.

13. Procédé selon l'une des revendications 1 à 12,
**caractérisé en ce que**
lors de la production de l'agrégat végétal, des plantes de la famille du miscanthus sont utilisées.

14. Procédé selon la revendication 13,
**caractérisé en ce que**
lors de la production de l'agrégat végétal, la plante miscanthusgiganteus est utilisée.

15. Procédé selon l'une des revendications 1 à 14,
**caractérisé en ce que**
le procédé est utilisé pour produire un béton léger, un mortier léger, un enduit léger, mais aussi un crépi léger et un crépi isolant.
